# NEUE EUROPÄISCHE PATENTSCHRIFT

(11) **EP 2 739 882 B2**
(45) Veröffentlichungstag und Bekanntmachung des Hinweises auf die Entscheidung über den Einspruch: **04.12.2019**
(45) Hinweis auf die Patenterteilung: 04.01.2017
(21) Anmeldenummer: 12740050.5
(22) Anmeldetag: 17.07.2012
(51) Int. Cl.: F16H 61/02

(54) **HYDRAULISCHE STEUERUNG FÜR EIN AUTOMATIKGETRIEBE EINES KRAFTFAHRZEUGS**
HYDRAULIC CONTROLLER FOR AN AUTOMATIC TRANSMISSION OF A MOTOR VEHICLE
COMMANDE HYDRAULIQUE POUR UNE TRANSMISSION AUTOMATIQUE D'UN VÉHICULE AUTOMOBILE

(30) Priorität: 04.08.2011 DE 102011109376
(43) Veröffentlichungstag der Anmeldung: 11.06.2014
(73) Patentinhaber: Daimler AG, 70372 Stuttgart (DE)
(72) Erfinder: BARAGA, Michael, 70327 Stuttgart (DE); BRANDENBURG, Markus, 73730 Esslingen (DE); KALCZYNSKI, Henrik, 70374 Stuttgart (DE); KULL, Thomas, 71332 Waiblingen (DE)
(74) Vertreter: JENSEN & SON
(86) Internationale Anmeldenummer: PCT/EP2012/002996
(87) Internationale Veröffentlichungsnummer: WO 2013/017201

(56) Entgegenhaltungen:
- DE-A1-102004 006 683
- DE-A1-102005 031 066
- DE-A1-102010 051 223

## Beschreibung

Die Erfindung betrifft eine hydraulische Steuerung für ein Automatikgetriebe eines Kraftfahrzeugs gemäß dem Oberbegriff des Anspruchs 1.

Die DE 10 2005 031 066 A1 beschreibt ein Automatikgetriebe mit einer hydraulischen Steuerung für ein Kraftfahrzeug. Das Automatikgetriebe weist ein Gangwechselsystem zum Wechseln eines eingelegten Gangs des Automatikgetriebes auf, welches wenigstens eine Gangwechsel-Kolben-Zylindereinheit mit einem Gangwechselkolben zur Betätigung eines Schaltelements in Form einer Lamellenkupplung und einem Gangwechsel-Druckraum, in dem durch Zuführen von Betriebsfluid ein Betätigungsdruck aufgebaut werden kann. Weiterhin weist die Gangwechsel-Kolben-Zylindereinheit einen durch den Gangwechselkolben vom Gangwechsel-Druckraum getrennten Fliehölraum in Form eines Druckausgleichsraums auf. Dem Fliehölraum kann über eine von einer ersten Zuführleitung versorgten Fliehölleitung Betriebsfluid zugeführt werden.

Weiterhin beschreibt die DE 10 2004 006 683 A1 eine hydraulische Steuerung mit einer Gangwechsel-Kolben-Zylindereinheit mit einem Fliehölraum, wobei die hydraulische Steuerung ferner eine zweite Zuführleitung zur Zuführung von Betriebsfluid zur Fliehölleitung, welche mittels eines Fliehölventils geschlossen und geöffnet werden kann, aufweist.

In einem rotierenden Druckraum wirken auf das sich darin befindliche Betriebsfluid Fliehkräfte, die einen Druckanstieg im Druckraum bewirken. Der Druckanstieg ist damit von der Drehzahl abhängig, mit der der Druckraum rotiert. Damit ist der effektive Druck im Druckraum größer als der angesteuerte und damit gewollte Druck. Wenn sich in einem Fliehölraum, welcher sich bezüglich dem Druckraum auf der gegenüberliegenden Seite des Kolbens befindet, ebenfalls Betriebsfluid befindet, dann wirken auch auf dieses Betriebsfluid Fliehkräfte, so dass sich dort ebenfalls ein Druckanstieg ergibt. Da der Druckraum und der Fliehölraum mit der gleichen Drehzahl rotieren, ist der Druckanstieg im Druckraum und im Fliehölraum gleich groß, so dass sie sich gegenseitig aufheben. Bei funktionierendem Fliehölausgleich stimmt damit der angesteuerte Druck mit dem tatsächlichen im Druckraum sehr gut überein, so dass eine exakte Ansteuerung des Schaltelements möglich ist. Funktioniert der Fliehölausgleich nicht richtig, insbesondere weil nicht ausreichend Betriebsfluid im Fliehölraum vorhanden ist, so ist der tatsächliche Druck im Druckraum größer als der angesteuerte Druck. Das Schaltelement überträgt dann unter Umständen ein größeres Drehmoment als gewünscht, was zu unkomfortablen Schaltungen führen kann. Bei nicht richtig funktionierendem Fliehölausgleich kann es auch dazu kommen, dass sich das Schaltelement durch den Druckanstieg im Druckraum ungewollt selbsttätig zumindest teilweise schließt.

Demgegenüber ist es die Aufgabe der Erfindung, eine hydraulische Steuerung für ein Automatikgetriebe eines Kraftfahrzeugs vorzuschlagen, bei welchem die Schaltelemente exakt ansteuerbar sind. Erfindungsgemäß wird die Aufgabe durch eine hydraulische Steuerung mit den Merkmalen des Anspruchs 1 gelöst.

Die hydraulische Steuerung weist eine zweite Zuführleitung zur Zuführung von Betriebsfluid zur Fliehölleitung und damit zum Fliehölraum auf. Die zweite Zuführleitung kann mittels eines Fliehölventils geschlossen und geöffnet werden. Damit kann in Situationen, in denen ein funktionierender Fliehölausgleich für die exakte Ansteuerung des Schaltelements notwendig ist, dem Fliehölraum durch Öffnen der zweiten Fliehölleitung schnell Betriebsfluid zugeführt und so der Fliehölraum schnell ausreichend gefüllt werden.

Die Fliehölleitung ist insbesondere mit mehreren Fliehölräumen mehrerer Schaltelemente, insbesondere Lamellenkupplungen des Automatikgetriebes verbunden. Wenn im Folgenden von einer Fliehölhaube gesprochen wird, können insbesondere auch mehrere oder alle Fliehölhauben des Automatikgetriebes gemeint sein.

Die Erfindung ist insbesondere dann vorteilhaft einsetzbar, wenn über geeignete Maßnahmen sichergestellt wird, dass der Gangwechsel-Druckraum immer mit Betriebsfluid gefüllt ist. In diesem Fall ist die Gefahr, dass sich das Schaltelement ungewollt schließt, besonders groß. Eine mögliche Maßnahme ist beispielsweise, in einen Abfluss des Gangwechsel-Druckraums ein Ventil vorzusehen, das unterhalb eines festlegbaren Drucks, beispielsweise in Höhe von 0,2 bis 0,4 bar die Verbindung zu einem Tank verschließt. Damit sinkt der Druck im Gangwechsel-Druckraum im Normalfall nicht unter den festlegbaren Druck. Eine andere Möglichkeit ist es, auch dann wenn das Schaltelement offen sein soll, einen Mindestdruck im Gangwechsel-Druckraum anzusteuern. Der genannte festlegbare Druck und der Mindestdruck sind dabei so gewählt, dass das Schaltelement beim Anliegen dieses Drucks im Gangwechsel-Druckraum noch sicher vollständig geöffnet ist.

Das Automatikgetriebe ist beispielsweise als ein Getriebe mit mehreren gekoppelten Planetensätzen ausgeführt. Es ist insbesondere als ein Automatikgetriebe entsprechend der DE 10 2008 055 626 A1 der Anmelderin ausgeführt. Das Automatikgetriebe kann aber auch beispielsweise als ein automatisiertes Zahnräderwechselgetriebe, als Doppelkupplungsgetriebe oder als ein stufenloses Getriebe ausgeführt sein.

Erfindungsgemäß sind in der ersten und/oder der zweiten Zuführleitung Hydraulikelemente zur Einstellung von Durchflussmengen des Betriebsfluids angeordnet. Die genannten Hydraulikelemente sind insbesondere als Blenden und/oder Drosseln ausgeführt. Mit den genannten Hydraulikelementen können vorteilhafterweise Durchflussmengen des Betriebsfluids in der ersten und zweiten Zuführleitung beeinflusst und eingestellt werden. Damit kann sichergestellt werden, dass nicht zu viel Betriebsfluid über die zweite Zuführleitung zum Fliehölraum fließt und so die erste Zuführleitung und damit Bauteile, die von der ersten Zuführleitung versorgt werden, unterversorgt wird.

In Ausgestaltung der Erfindung ist das Fliehölventil als ein ansteuerbares Ventil ausgeführt, welches in einer Grundstellung die zweite Zuführleitung verschließt. Das Fliehölventil ist insbesondere als ein Schieberventil ausgeführt, auf dessen Schieber zum einen ein Steuerdruck und zum anderen eine Federkraft wirkt. In der Grundstellung, in der kein Steuerdruck auf das Fliehölventil wirkt, wird der Schieber von der Feder in eine Position gedrückt, in der er die zweite Zuführleitung verschließt. Damit ist eine einfache Ansteuerung des Fliehölventils möglich. Der Steuerdruck wird beispielsweise von einem Vorsteuerventil eingestellt. Das Vorsteuerventil ist beispielsweise als ein Regelmagnetventil, insbesondere als ein so genanntes Direktsteuerventil ausgeführt. Das Vorsteuerventil wird mit einem Versorgungsdruck beispielsweise in Form eines Arbeitsdrucks oder eines Ventilversorgungsdrucks versorgt und leitet daraus entsprechend der Ansteuerung durch eine elektronische Getriebesteuerung einen gewünschten Vorsteuerdruck ab.

Erfindungsgemäß ist die erste Zuführleitung über zwei Anschlüsse bzw. Teilstücke mit dem Fliehölventil verbunden. Mittels des Fliehölventils kann einer der Anschlüsse bzw. ein Teilstück abgesperrt werden, so dass über diesen Anschluss bzw. dieses Teilstück kein Betriebsfluid in die erste Zuführleitung fließen kann. Der eine Anschluss bzw. das Teilstück wird insbesondere dann abgesperrt, wenn das Fliehölventil die zweite Zuführleitung öffnet. Damit kann der Durchfluss und der Druck in der ersten Zuführleitung durch das Fliehölventil verändert werden.

Dies ist insbesondere dann wichtig, wenn durch eine Mehrfachnutzung des Steuerdrucks für das Fliehölventils mit der Ansteuerung des Fliehölventils gleichzeitig ein Druck vor dem Fliehölventil erhöht wird und in der ersten Zuführleitung ein hydrodynamischer Drehmomentwandler, angeordnet ist, dessen Versorgungsdruck eine Druckgrenze nicht überschreiten darf. In diesem Fall kann in dem nicht absperrbaren Anschluss der ersten Zuführleitung am Fliehölventil eine Blende oder Drossel angeordnet werden, über die der Druck in der ersten Zuführleitung bei steigendem Druck vor dem Fliehölventil begrenzt werden kann.

Die Erfindung ist insbesondere dann vorteilhaft einsetzbar, wenn in der ersten Zuführleitung ein hydrodynamischer Drehmomentwandler und/ oder ein Getriebeölkühler und/oder Abzweigungen in Schmierölleitungen angeordnet sind. Über die Schmierölleitungen werden Bauteile des Automatikgetriebes, wie beispielsweise Lamellen von Lamellenkupplungen, Zahnräder oder Lager geschmiert und/oder gekühlt.

In Ausgestaltung der Erfindung weist die hydraulische Steuerung ein Vorsteuerventil und eine erste und eine dritte Ventileinheit auf. Ein mittels des Vorsteuerventils eingestellter Vorsteuerdruck ist als Steuerdruck auf die erste und dritte Ventileinheit sowie auf das Fliehölventil als zweite Ventileinheit leitbar. Mittels einer Gegendruckleitung kann ein gegen den Steuerdruck wirkender Gegendruck an die dritte Ventileinheit angelegt und damit eine Betätigung der dritten Ventileinheit verhindert werden.

Die Ventileinheiten sind insbesondere als Schieberventile, beispielsweise als Schaltschieber oder Regelschieber ausgeführt.

Unter einer Betätigung der dritten Ventileinheit ist insbesondere eine Änderung einer Schaltstellung der dritten Ventileinheit oder eine Änderung eines von der dritten Ventileinheit eingestellten Drucks oder Durchflusses zu verstehen.

Die dritte Ventileinheit ist insbesondere als ein Schaltschieber ausgeführt, auf dessen Schieber auf einer Seite der Vorsteuerdruck als Steuerdruck und auf einer gegenüberliegenden Seite des Schiebers der Gegendruck wirken kann. Zusätzlich weist die dritte Ventileinheit insbesondere eine Feder auf, die eine dem Vorsteuerdruck entgegen wirkende Kraft auf den Schieber aufbringen kann. Durch eine entsprechende Auslegung der wirksamen Flächen am Schieber, der Druckbereiche des Vorsteuer- und des Gegendrucks sowie gegebenenfalls der Feder kann sichergestellt werden, dass durch Anlegen eines Gegendrucks an die dritte Ventileinheit eine Betätigung der Ventileinheit verhindert werden kann. In diesem Fall ist unter einer Betätigung der Ventileinheit die Änderung der Schaltstellung des Schaltventils zu verstehen.

In Ausgestaltung der Erfindung ist zur Betätigung der ersten Ventileinheit, dem Fliehölventil als zweite Ventileinheit und der dritten Ventileinheit jeweils ein erster, zweiter und dritter Druckbereich vorgesehen. Darunter ist bei einem Schaltventil zu verstehen, dass durch Änderungen des Steuerdrucks innerhalb des dem Schaltventil zugeordneten Druckbereichs Änderungen am Zustand oder des Verhaltens des Schaltventils ergeben. Dabei wird durch eine Änderung des Steuerdrucks von einer Grenze zur anderen Grenze des Druckbereichs eine Änderung der Schaltstellung des Schaltschiebers erreicht. Eine Erhöhung des Steuerdrucks über eine obere Grenze oder eine Verringerung unter eine untere Grenze des jeweils zugeordneten Druckbereichs hat dann keine weitere Auswirkung auf die Schaltstellung des Schaltschiebers. Bei einer als Regelschieber ausgeführten Ventileinheit verändert sich bei Änderungen innerhalb des Druckbereichs der eingeregelte Druck oder die Durchflussmenge. Es ist aber auch möglich, dass sich in dem Fall in dem sich der Steuerdruck außerhalb des zugeordneten Druckbereichs befindet, er noch Einfluss auf den eingeregelten Druck oder die Durchflussmenge hat. Die Druckbereiche können sich überlappen, es ist aber auch möglich dass es zwischen den Druckbereichen jeweils einen Bereich gibt, der keinem der Druckbereiche zugeordnet ist. Der erste, zweite und dritte Druckbereich sind dabei in Richtung steigendem Druck insbesondere nacheinander angeordnet. Beispielsweise ist der ersten Ventileinheit ein Druckbereich von ca. 0 bis 3 bar, dem Fliehölventil ein Druckbereich von 4 bis 5 bar und der dritten Ventileinheit ein Druckbereich von 6 bis 8 bar zugeordnet.

Durch den Gegendruck an der dritten Ventileinheit kann eine Betätigung der dritten Ventileinheit insbesondere bei einer gewollten Betätigung des Fliehölventils sicher vermieden werden. Durch die Aufteilung der Druckbereiche sollte dies eigentlich gar nicht vorkommen. Allerdings kann es auf Grund von Bauteiltoleranzen, Verschleiß oder Alterung der Hydraulikbauteile zu Verschiebungen und/oder Überlappungen der Druckbereiche und damit zu ungewollten Betätigungen der dritten Ventileinheit kommen. Durch das Anlegen des Gegendrucks an der dritten Ventileinheit kann ein sicherer Betrieb der hydraulischen Steuerung ermöglicht werden.

Es ist aber auch möglich, dass der dritte Druckbereich zwischen dem ersten und dem zweiten Druckbereich angeordnet ist. Beispielsweise ist der ersten Ventileinheit ein Druckbereich von ca. 0 bis 3 bar, der dritten Ventileinheit ein Druckbereich von 4 bis 5 bar und dem Fliehölventil ein Druckbereich von 6 bis 8 bar zugeordnet Durch die Verhinderung der Betätigung der dritten Ventileinheit durch den Gegendruck kann die erste oder zweite Ventileinheit angesteuert werden, ohne dass die Ansteuerung Auswirkungen auf die dritte Ventileinheit hat. In dem genannten Beispiel kann das Fliehölventil angesteuert werden, ohne dass die dritte Ventileinheit betätigt wird. Damit können das Fliehölventil und die dritte Ventileinheit unabhängig voneinander von nur einem Vorsteuerventil angesteuert werden.

In Ausgestaltung der Erfindung wird der Gegendruck, der an der dritten Ventileinheit gegen den Steuerdruck wirken kann, von einem Druck abgeleitet, der hauptsächlich eine andere Funktion erfüllt. Unter der Formulierung "hauptsächlich eine andere Funktion erfüllt" ist insbesondere zu verstehen, dass dieser Druck nicht primär dafür eingestellt wird, damit daraus der Gegendruck abgeleitet wird. Der genannte Druck wird beispielsweise eingestellt, um eine weitere Ventileinheit anzusteuern oder insbesondere dazu, um ein Schaltelement des Automatikgetriebes beispielsweise in Form einer Lamellenkupplung oder Lamellenbremse zu betätigen. Der Druck, von dem der Gegendruck abgeleitet wird, wird insbesondere so ausgewählt, dass der Gegendruck in den Situationen, in denen eine Ansteuerung des Fliehölventils sinnvoll oder notwendig ist, ausreichend hoch ist, um eine ungewollte Betätigung der dritten Ventileinheit zu verhindern.

In Ausgestaltung der Erfindung weist die hydraulische Steuerung ein Umschaltventil auf, mittels welchem der Gegendruck von einem ersten oder von einem zweiten Druck abgeleitet werden kann. Das Umschaltventil ist insbesondere als ein selbsttätig schaltendes Ventil ausgeführt, das den Gegendruck vom höheren der beiden genannten Drücke ableitet. Das Umschaltventil ist dabei insbesondere als Kugelumschaltventil ausgeführt. Damit kann die Betätigung der dritten Ventileinheit nicht nur in Abhängigkeit eines Drucks, sondern in Abhängigkeit von zwei Drücken verhindert werden. Die Ansteuerung der zweiten Ventileinheit ohne Auswirkungen auf die dritte Ventileinheit ist damit in sehr vielen Situationen möglich.

In Ausgestaltung der Erfindung wird der Gegendruck von einem Druck eines Betätigungssystems eines Schaltelements des Automatikgetriebes abgeleitet. Damit kann die Ansteuerung des Fliehölventils ohne Auswirkungen auf die dritte Ventileinheit dann ermöglicht werden, wenn bestimmte Gänge des Automatikgetriebes eingelegt und damit bestimmte Schaltelemente betätigt sind. Das schnelle Füllen einer oder mehrerer Fliehölhauben ist meist nur bei bestimmten Schaltungen innerhalb des Automatikgetriebes notwendig. Welche Schaltungen davon betroffen sind, hängt vom Aufbau des Automatikgetriebes ab. Es kann beispielsweise Schaltungen geben, bei dem ein Schaltelement in Form einer Lamellenkupplung sehr stark beschleunigt wird, es dabei aber geschlossen bleiben muss. Ist dabei die Fliehölhaube nicht ausreichend gefüllt, kann es wie oben beschrieben zu einem ungewollten Schließen des Schaltelements kommen. Leitet man den Gegendruck von einem Betätigungsdruck eines Schaltelements ab, so können Gänge festgelegt werden, in denen die Ansteuerung des Fliehölventils ohne Betätigung der dritten Ventileinheit möglich ist. Setzt man zusätzlich ein oben beschriebenes Umschaltventil ein, das zwischen zwei Betätigungsdrücken zweier unterschiedlicher Schaltelemente umschalten kann, so steht in einer Vielzahl von Gängen ein ausreichend hoher Betätigungsdruck zur Verfügung.

Die Erfindung ist besonders vorteilhaft einsetzbar, wenn die erste Ventileinheit zur Einstellung eines Schmierdrucks vorgesehen ist und die dritte Ventileinheit einem Parksperrenbetätigungssystem zugeordnet ist.

Die erste Ventileinheit ist insbesondere so ausgeführt, dass ein steigender Steuerdruck einen steigenden Schmierdruck bewirkt. Bei dem oben genannten Beispiel der den Ventileinheiten zugeordneten Druckbereichen bedeutet das, dass bei der Ansteuerung des Parksperrenbetätigungssystems oder des Fliehölventils ein hoher Schmierdruck eingestellt wird.

Eine Parksperre des Parksperrenbetätigungssystems muss nur dann angesteuert, insbesondere geschlossen werden, wenn kein Gang im Automatikgetriebe eingelegt ist. Damit stellt es für das Parksperrenbetätigungssystem keinerlei funktionale Beschränkung dar, wenn in einigen Gängen wegen des Gegendrucks keine Ansteuerung der Parksperre möglich ist. Andererseits ist ein Befüllen der Fliehölhauben nur dann notwendig, wenn im Automatikgetriebe bestimmte Gänge eingelegt sind. Die Parksperre wird nur angesteuert, wenn im Automatikgetriebe kein Gang eingelegt ist. Damit kann das Fliehölventil in allen notwendigen Situationen angesteuert werden. Die Ansteuerung des Parksperrenbetätigungssystems und des Fliehölventils durch ein gemeinsames Regelmagnetventil schränkt die Funktionalitäten der beiden Systeme nicht ein.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigt:

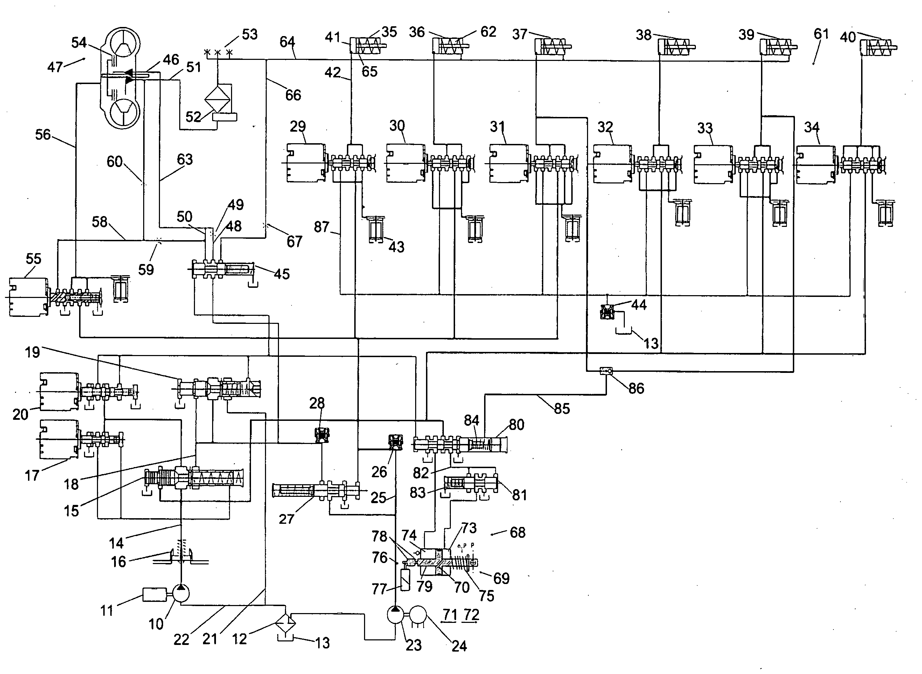

- Fig. 1: einen Hydraulikplan einer hydraulischen Steuerung eines Automatikgetriebes.

Gemäß Fig. 1 weist eine hydraulische Steuerung für ein Automatikgetriebe eines Kraftfahrzeugs eine Hauptpumpe 10 auf, die von einem Verbrennungsmotor 11 angetrieben wird. Die Hauptpumpe 10 saugt über einen Saugfilter 12 Betriebsfluid in Form von Getriebeöl aus einem Tank 13 an. In der Fig. 1 sind an mehreren Stellen Abflüsse zu einem Tank dargestellt. Dies ist so zu verstehen, dass Getriebeöl von diesen Abflüssen direkt oder indirekt in den Tank 13 gelangt. Die Hauptpumpe 10 fördert Getriebeöl in eine Arbeitsdruckleitung 14, welche einen Arbeitsdruckschieber 15 mit Getriebeöl versorgt. In der Arbeitsdruckleitung 14 ist ein Rückschlagventil 16 angeordnet, welches so ausgeführt ist, dass Getriebeöl von der Hauptpumpe 10 zum Arbeitsdruckschieber 15 fließen kann, aber nicht umgekehrt.

Der Arbeitsdruckschieber 15 ist als ein üblich aufgebauter Regelschieber ausgeführt, auf den als Steuerdruck ein von einem Regelmagnetventil-Arbeitsdruck 17 eingestellter Druck wirkt. Gemeinsam mit einer Federkraft, welche einen Grunddruck des Arbeitsdrucks einstellt, wirkt der Steuerdruck gegen den von der Arbeitsdruckleitung 14 zurückgeführten Arbeitsdruck. Durch Änderung des vom Regelmagnetventil-Arbeitsdruck 17 eingestellten Drucks, kann die Höhe des Arbeitsdrucks eingestellt werden. Erreicht der Arbeitsdruck den vom Regelmagnetventil-Arbeitsdruck 17 eingestellten Sollwert, so wird vom Arbeitsdruckschieber 15 über eine Schmierdruckleitung 18 eine Verbindung zwischen der Arbeitsdruckleitung 14 und einem Schmierdruckschieber 19 hergestellt. Der Schmierdruckschieber 19 wird also nur dann mit Getriebeöl versorgt, wenn der Arbeitsdruck seinen vom Regelmagnetventil-Arbeitsdruck 17 eingestellten Sollwert erreicht hat. Der Arbeitsdruckschieber 15 regelt damit die Arbeitsdruck in der Arbeitsdruckleitung 14 auf den vom Regelmagnetventil-Arbeitsdruck 17 eingestellten Sollwert ein.

Der Schmierdruckschieber 19 ist ebenfalls als ein üblich aufgebauter Regelschieber ausgeführt, auf den als Steuerdruck ein von einem Regelmagnetventil-Schmierdruck 20 eingestellter Druck wirkt. Das Regelmagnetventil-Schmierdruck 20 kann damit als ein Vorsteuerventil bezeichnet werden. Gemeinsam mit einer Federkraft, welche einen Grunddruck des Schmierdrucks einstellt, wirkt der Steuerdruck gegen den von der Schmierdruckleitung 18 zurückgeführten Schmierdruck. Durch Änderung des vom Regelmagnetventil-Schmierdruck 20 eingestellten Drucks, kann die Höhe des Schmierdrucks eingestellt werden. Erreicht der Schmierdruck den eingestellten Sollwert, so wird vom Schmierdruckschieber 19 eine Verbindung zwischen der Schmierdruckleitung 18 und einer Rückführleitung 21 hergestellt. Über die Rückführleitung 21 wird Getriebeöl zu einer Ansaugleitung 22, die die Hauptpumpe 10 mit dem Saugfilter 12 verbindet, zurückgeführt. Der Schmierdruckschieber 19 regelt damit den Schmierdruck in der Schmierdruckleitung auf den vom Regelmagnetventil-Schmierdruck 20 eingestellten Sollwert ein. Der Schmierdruckschieber 19 ist dabei so ausgeführt, dass der maximal benötigte Schmierdruck bei einem Steuerdruck von ca. 3 bar erreicht wird. Dem Schmierdruckschieber ist damit ein Druckbereich von 0 bis 3 bar zugeordnet. Steigt der Steuerdruck weiter an, so steigt auch der eingestellte Schmierdruck weiter an.

Das Regelmagnetventil-Arbeitsdruck 17 und das Regelmagnetventil-Schmierdruck 20 sind beide als so genannte Direktsteuerventile ausgeführt. Bei Direktsteuerventilen wirkt eine Kraft eines von einer nicht dargestellten elektronischen Steuereinrichtung angesteuerten Elektromagneten direkt als Steuerkraft auf einen Schieber. Gegen die Steuerkraft wirken eine Federkraft und ein zurückgeführter Druck, dessen Höhe von dem Direktsteuerventil entsprechend der Ansteuerung der elektronischen Steuereinrichtung eingestellt werden soll. Der von einem Direktsteuerventil eingestellte Druck wird von einem Versorgungsdruck abgeleitet. Im Fall des Regelmagnetventils-Arbeitsdruck 17 und des Regelmagnetventils-Schmierdruck 20 dient der Arbeitsdruck in der Arbeitsdruckleitung 14 als Versorgungsdruck.

Die hydraulische Steuerung kann auch einen nicht dargestellten Anschluss aufweisen, über den eine ansteuerbare Drehmomentverteilvorrichtung für einen Allradantrieb des Kraftfahrzeugs mit Arbeitsdruck versorgt werden kann.

Die hydraulische Steuerung verfügt neben der Hauptpumpe 10 über eine Zusatzpumpe 23, die von einem von der elektronischen Steuereinrichtung angesteuerten Elektromotor 24 angetrieben werden kann. Die Zusatzpumpe 23 kann zum einen die Hauptpumpe 10 in Situationen, in denen die Fördermenge der Hauptpumpe 10 nicht ausreicht, unterstützen, wobei ein maximal erreichbarer Druck der Zusatzpumpe 23 deutlich geringer ist als ein maximaler Druck der Hauptpumpe 10. Zum anderen kann die Zusatzpumpe 23 eine Grundversorgung der hydraulischen Steuerung bei stehendem Verbrennungsmotor 11 und damit stehender Hauptpumpe 10 sicherstellen. Die Zusatzpumpe 23 saugt ebenfalls über den Saugfilter 12 aus dem Tank 13 Getriebeöl an.

Sie fördert Getriebeöl in eine Zusatzpumpenleitung 25, welche über ein Rückschlagventil 26 mit der Arbeitsdruckleitung 14 verbunden ist. Das Rückschlagventil 26 ist so angeordnet, dass Getriebeöl von der Zusatzpumpenleitung 25 in die Arbeitsdruckleitung 14 fließen kann, aber nicht umgekehrt. Damit kann die Zusatzpumpe 23 in dem Fall, in dem der Arbeitsdruck kleiner als ihr maximal erreichbarer Druck ist, gemeinsam mit der Hauptpumpe 10 in die Arbeitsdruckleitung 14 fördern. Die Zusatzpumpenleitung 25 ist außerdem mit einem Zusatzpumpenschieber 27 verbunden. Mittels des Zusatzpumpenschiebers 27 kann eine Verbindung zwischen der Zusatzpumpenleitung 25 und der Schmierdruckleitung 18 hergestellt werden, wobei zwischen Zusatzpumpenschieber 27 und Schmierdruckleitung 18 ein Rückschlagventil 28 so angeordnet ist, dass Getriebeöl vom Zusatzpumpenschieber 27 in die Schmierdruckleitung 18 fließen kann, aber nicht umgekehrt. In einer dargestellten Grundstellung des Zusatzpumpenschiebers 27 ist die genannte Verbindung zwischen Zusatzpumpenleitung 25 und der Schmierdruckleitung 18 unterbrochen, in einer geschalteten Stellung des Zusatzpumpenschiebers 27 ist die genannte Verbindung hergestellt. Auf den Zusatzpumpenschieber 27 wirkt als Steuerdruck der Arbeitsdruck in der Arbeitsdruckleitung 14 gegen eine Federkraft. Die Federkraft ist so ausgelegt, dass der Zusatzpumpenschieber 27 so lange in der Grundstellung bleibt, bis der Arbeitsdruck den maximal erreichbaren Druck der Zusatzpumpe 23 überschreitet. Ist dieser Druck erreicht, so wird die Verbindung zwischen der Zusatzpumpenleitung 25 und der Schmierdruckleitung 18 über den Zusatzpumpenschieber 27 hergestellt und die Zusatzpumpe 23 kann Getriebeöl in die Schmierdruckleitung 18 fördern, in der ein deutlich niedrigerer Druck als der Arbeitsdruck herrscht. Damit kann die Zusatzölpumpe 23 auch dann die Hauptpumpe 10 unterstützen, wenn der Arbeitsdruck größer als ihr maximal erreichbarer Druck ist und sie deshalb nicht mehr in die Arbeitsdruckleitung 14 fördern kann.

Über die Arbeitsdruckleitung 14 werden auch Regelmagnetventile 29, 30, 31, 32, 33 und 34 für die Betätigung von Schaltelementen des Automatikgetriebes in Form von Lamellenkupplungen und -bremsen mit Arbeitsdruck versorgt. Die Lamellenkupplungen und -bremsen sind schematisch durch Gangwechsel-Kolben-Zylindereinheiten 35, 36, 37, 38, 39 und 40 dargestellt, mittels welchen die Lamellenkupplungen und - bremsen geschlossen und geöffnet werden können. Die Gangwechsel-Kolben-Zylindereinheiten 35, 38 und 40 sind Lamellenbremsen und die Gangwechsel-Kolben-Zylindereinheiten 36, 37und 39 sind Lamellenkupplungen zugeordnet. Die Regelmagnetventile 29, 30, 31, 32, 33 und 34 sind identisch aufgebaut, so dass nur das Regelmagnetventil 29 näher erläutert wird. Das Regelmagnetventil 29 ist ebenfalls als ein Direktsteuerventil ausgeführt, das von der nicht dargestellten elektronischen Steuereinrichtung angesteuert wird. Das Regelmagnetventil 29 wird über einen Anschluss mit Arbeitsdruck versorgt. Es dient zur Einstellung eines Betätigungsdrucks in einem Gangwechsel-Druckraum 41 der Gangwechsel-Kolben-Zylindereinheit 35, mit dem es über eine Leitung 42 verbunden ist. Der Betätigungsdruck in der Leitung 42 wird als Steuerdruck auf das Regelmagnetventil 29 zurückgeführt. Um Druckschwingungen in der Leitung 42 zu vermeiden, wird der Betätigungsdruck zusätzlich an zwei weitere Anschlüsse des Regelmagnetventils 29 zurückgeführt. Als weitere Maßnahme zur Vermeidung von Druckschwingungen ist die Leitung 42 über das Regelmagnetventil 29 mit einem Druckspeicher 43 verbunden. Über eine Tankabflussleitung 87 ist das Regelmagnetventil 29 und auch die Regelmagnetventile 30, 31, 32, 33 und 34 mit dem Tank 13 verbunden. In der Tankabflussleitung 87 ist ein federbelastetes Rückschlagventil 44 angeordnet. Das Rückschlagventil 44 ist so angeordnet, dass Getriebeöl in den Tank 13 fließen kann. Es ist außerdem so ausgeführt, dass es den Durchfluss in Richtung Tank 13 nur öffnet, wenn ein Mindestdruck von beispielsweise 0,2 bis 0,4 bar in der Tankabflussleitung 87 herrscht. Damit wird sichergestellt, dass in der Tankabflussleitung 87 immer mindestens der genannte Mindestdruck anliegt. Dies bewirkt, dass die Leitung 42 und der Gangwechsel-Druckraum 41 nicht leerlaufen können, sondern immer mit Getriebeöl gefüllt sind.

Durch entsprechende Ansteuerung des Regelmagnetventils 29 kann damit ein Betätigungsdruck im Gangwechsel-Druckraum der Gangwechsel-Kolben-Zylindereinheit 35 auf- und abgebaut und so die der Gangwechsel-Kolben-Zylindereinheit 35 zugeordnete Lamellenbremse geschlossen und geöffnet werden. Durch entsprechende Ansteuerung der Regelmagnetventile 29, 30, 31, 32, 33 und 34 können damit die Lamellenkupplungen und -bremsen des Automatikgetriebes geschlossen und geöffnet werden und so die einzelnen Gänge ein- und ausgelegt werden. Die Regelmagnetventile 29, 30, 31, 32, 33 und 34 und die Gangwechsel-Kolben-Zylindereinheiten 35, 36, 37, 38, 39 und 40 können damit als ein Gangwechselsystem 61 bezeichnet werden. Mit dem hier dargestellten Gangwechselsystem 61 können insgesamt neun Vorwärtsgänge und ein Rückwärtsgang geschaltet werden.

Die Schmierdruckleitung 18 ist über ein Fliehölventil 45 und eine erste Zuführleitung 63, welches als ein ansteuerbarer Schaltschieber ausgeführt ist, mit einem Wandlerzufluss 46 eines hydrodynamischen Drehmomentwandlers 47 verbunden. Auf das Fliehölventil 45 wirkt als Steuerdruck der vom Regelmagnetventil-Schmierdruck 20 eingestellte Druck gegen eine Federkraft. Die Federkraft ist so ausgelegt, dass das Fliehölventil 45 bei Überschreiten einer Druckgrenze von beispielsweise 4 bar aus einer dargestellten Grundstellung in eine Schaltstellung wechselt. Der vom Regelmagnetventil-Schmierdruck 20 eingestellte Druck wirkt also sowohl am Schmierdruckschieber 19, als auch am Fliehölventil 45 als Steuerdruck. Dem Fliehölventil 45 wird damit ein Druckbereich von 3 bis 5 bar zugeordnet.

In der dargestellten Grundstellung des Fliehölventils 45 ist die Schmierdruckleitung 18 über das Fliehölventil 45 über zwei Anschlüsse mit dem Wandlerzufluss 46 verbunden. In einem ersten Teilstück 48 der ersten Zuführleitung 63 zwischen Fliehölventil 45 und Wandlerzufluss 46 ist eine Blende 49 angeordnet, in einem zweiten, zum ersten Teilstück 48 parallel verlaufenden Teilstück 50 ist kein entsprechendes hydraulisches Bauteil angeordnet. Das zweite Teilstück 50 ist nur in der Grundstellung des Fliehölventils 45 mit der Schmierdruckleitung 18 verbunden. Das erste Teilstück 48 ist dagegen immer mit der Schmierdruckleitung 18 verbunden. Damit wird erreicht, dass in der Schaltstellung des Fliehölventils 45, in der wie oben beschrieben ein sehr hoher Schmierdruck wirkt, über die Blende 49 der Druck am Wandlerzufluss 46 so weit abgesenkt wird, dass Schädigungen des Drehmomentwandlers 47 sicher vermieden werden.

Nach Durchströmen des Drehmomentwandlers 47 strömt das Getriebeöl über einen Wandlerabfluss 51 zu einem Getriebeölkühler 52. Vom Getriebeölkühler 52 werden verschiedene Schmierstellen 53 im Automatikgetriebe mit gekühltem Getriebeöl versorgt.

Der Drehmomentwandler 47 weist eine Überbrückungskupplung 54 auf, die von einem Regelmagnetventil-Wandler 55 angesteuert wird. Das Regelmagnetventil-Wandler 55 stellt dazu entsprechend einer Ansteuerung durch die elektronische Steuereinrichtung in einer Leitung 56, die mit einem nicht dargstellten Druckraum der Überbrückungskupplung 54 verbunden ist, einen Betätigungsdruck ein. Der Drehmomentwandler 47 ist damit als so genannter 3-Kanal-Wandler ausgeführt. Das Regelmagnetventil-Wandler 55 ist ebenfalls als Direktsteuerventil ausgeführt und wird mit Arbeitsdruck versorgt. Als Besonderheit wird dem Regelmagnetventil-Wandler 55 als Vorsteuerung ein einem Innendruck des Drehmomentwandlers 47, welcher gegen den Betätigungsdruck an der Überbrückungskupplung 54 wirkt, entsprechender Druck zugeführt. Der genannte Druck wirkt gleichsinnig zur Kraft des Elektromagneten des Regelmagnetventils-Wandler 55 und wird in einer Leitung 58 abgegriffen, die über eine erste Blende 59 mit dem Wandlerzufluss 46 und über eine zweite Blende 60 mit dem Wandlerabfluss 51 verbunden ist. Bei geeigneter Wahl der Blenden 59 und 60 entspricht der Druck in der Leitung 58 dem Innendruck des Drehmomentwandlers 47. Die Wirkungsweise der Rückführung und die Ableitung des Innendrucks sind in der DE 10 2004 012 117 A1 ausführlich beschrieben.

Die Gangwechsel-Kolben-Zylindereinheiten 36, 37 und 39 der Lamellenkupplungen weisen jeweils einen Fliehölraum 62 auf, die über eine Fliehölleitung 64 mit dem Getriebekühler 52 und damit zumindest indirekt mit der ersten Zuführleitung 63 verbunden sind. Der Fliehölraum 62 ist bezüglich eines Gangwechselkolbens 65, der auf die Lamellenkupplungen wirkt, gegenüber dem Gangwechsel-Druckraum 41 angeordnet. Sofern der Fliehölraum 62 ausreichend mit Getriebeöl gefüllt ist, gleichen sich die durch Rotation der Gangwechsel-Kolben-Zylindereinheiten 36, 37 und 39 entstehenden Druckanstiege im Gangwechsel-Druckraum 41 und im Fliehölraum 62 aus.

In einigen Situationen, beispielsweise bei bestimmten Schaltungen im Automatikgetriebe ist ein funktionierender Fliehölausgleich, also ausreichend gefüllte Fliehölräume 62 wichtig. In diesen Situationen kann über einen entsprechenden Druck des Regelmagnetventil-Schmierdrucks 20 das Fliehölventil 45 wie oben beschrieben in seine Schaltstellung gebracht werden. In dieser Schaltstellung wird über das Fliehölventil 45 eine Verbindung zwischen der Schmierölleitung 18 und einer zweiten Zuführleitung 66, welche in die Fliehölleitung 64 mündet, hergestellt. Damit wird der Fliehölleitung 64 nicht nur über die erste Zuführleitung 63 sondern auch über die zweite Zuführleitung 66 Getriebeöl zugeführt. Damit können die Fliehölräume 62 der Gangwechsel-Kolben-Zylindereinheiten 36, 37 und 39 sehr schnell gefüllt und damit ein funktionierender Fliehölausgleich erreicht werden.

In der zweiten Zuführleitung 66 ist eine Blende 67 angeordnet. Über diese Blende 67 und die Blende 49 im ersten Teilstück 48 der ersten Zuführleitung 63 können Durchflussmengen des Getriebeöls in die erste und zweite Zuführleitung 63, 66 eingestellt werden. In der Fliehölleitung 64 kann ein Rückschlagventil so abgeordnet sein, dass ein Rückfluss von Getriebeöl von der zweiten Zuführleitung 66 in Richtung Getriebekühler 52 verhindert wird.

Die hydraulische Steuerung weist außerdem ein Parksperrenbetätigungssystem 68 auf, mittels welchem eine nicht dargestellte Parksperre ein- und ausgelegt werden kann. Das Parksperrenbetätigungssystem 68 verfügt über eine Parksperren-Kolben-Zylindereinheit 69 mit einem Parksperrenkolben 70, der zumindest mittelbar mit einer so genannten, nicht dargestellten Parksperrenklinke verbunden ist. Durch Verschieben des Parksperrenkolbens 70 in eine erste Betätigungsrichtung 71 wird die Parksperre aus- und bei einem Verschieben in eine, der ersten Betätigungsrichtung 71 entgegen gesetzten zweiten Betätigungsrichtung 72 eingelegt. Ist die Parksperre eingelegt, so wird diese Stellung im Folgenden als P-Stellung bezeichnet, ist die Parksperre nicht eingelegt, so wird diese Stellung als Nicht-P-Stellung bezeichnet. Die Parksperren-Kolben-Zylindereinheit 69 weist einen ersten Parksperren-Druckraum 73 auf. Durch Zuführen von Getriebeöl in den ersten Parksperren-Druckraum 73 kann der Parksperrenkolben 70 in Richtung Nicht-P (erste Betätigungsrichtung 71) verschoben werden. Die Parksperren-Kolben-Zylindereinheit 69 weist auf einer bezüglich dem Parksperrenkolben 70 dem ersten Parksperren-Druckraum 73 entgegen gesetzten Seite einen zweiten Parksperren-Druckraum 74 auf. Durch Zuführen von Getriebeöl in den zweiten Parksperren-Druckraum 74 kann der Parksperrenkolben 70 in Richtung P (zweite Betätigungsrichtung 72) verschoben werden. Die Parksperren-Kolben-Zylindereinheit 69 weist außerdem eine Parksperren-Feder 75 auf, die so angeordnet ist, dass sie auf den Parksperrenkolben 70 eine Federkraft in Richtung P aufbringt.

Die Parksperren-Kolben-Zylindereinheit 69 weist außerdem eine ansteuerbare Rastierung 76 auf, mittels welcher eine Position des Parksperrenkolbens 70 festgelegt werden kann. Die Rastierung 76 verfügt dazu über einen von der elektronischen Steuereinrichtung angesteuerten Hubmagnet 77, der in eine Kontur 78 einer mit dem Parksperrenkolben 70 verbundene Kolbenstange 79 eingreifen kann. Die Rastierung 76 ist so ausgeführt, dass sie in Richtung P überdrückt werden kann. Die genannte Kontur 78 ist dazu so ausgeführt, dass sie den Hubmagnet 77 bei einer Verschiebung des Parksperrenkolbens 70 in Richtung P zurückdrücken kann. Ein Überdrücken der Rastierung 76 in Richtung Nicht-P ist dagegen nicht möglich.

Über einen mit Arbeitsdruck versorgten Parksperrenschieber 80 kann Getriebeöl in den zweiten Parksperren-Druckraum 74 zugeführt werden und so zusätzlich zur Kraft der Parksperren-Feder 75 eine Betätigungskraft in Richtung P aufgebracht werden. Der Parksperrenschieber 80 ist als ein Schaltschieber mit zwei Stellungen ausgeführt. In einer nicht dargestellten P-Stellung ist die Arbeitsdruckleitung 14 über den Parksperrenschieber 80 mit dem zweiten Parksperren-Druckraum 74 verbunden, so dass diesem Getriebeöl zugeführt wird.

Bei einem Verschieben des Parksperrenkolbens 70 in Richtung P muss Getriebeöl aus dem ersten Parksperren-Druckraum 73 abgeführt werden. Damit dies schnell und nur mit geringem Widerstand möglich ist, weist das Parksperrenbetätigungssystem 68 einen als Schaltschieber mit zwei Stellungen ausgeführten Entleerschieber 81 mit großen Durchflussquerschnitten auf, der mit dem ersten Parksperren-Druckraum 73 verbunden ist. In einer dargestellten Entleer-Stellung ist der erste Parksperren-Druckraum 73 über den Entleerschieber 81 mit dem Tank 13 verbunden. Damit muss das Getriebeöl aus dem ersten Parksperren-Druckraum 73 nicht über den Parksperrenschieber 80 mit deutlich kleineren Durchflussquerschnitten in den Tank 13 abgeführt werden, sondern kann ohne großen Widerstand über den Entleerschieber 81 in den Tank 13 abfließen. In einer nicht dargestellten Füll-Stellung des Entleerschiebers 81 ist eine Parksperren-Verbindungsleitung 82, die einen Anschluss des Parksperrenschiebers 80 mit dem Entleerschieber 81 verbindet, über den Entleerschieber 81 mit dem ersten Parksperren-Druckraum 73 verbunden. Damit kann dem ersten Parksperren-Druckraum 73 in der Füll-Stellung des Entleerschiebers 81 Getriebeöl zugeführt werden und so der Parksperrenkolben 70 in Richtung Nicht-P verschoben werden. Als Steuerdruck für die Umschaltung zwischen der Füll- und der Entleerstellung des Entleerschiebers 81 wirkt der Druck in der Parksperren-Verbindungsleitung 82, welcher gegen eine Federkraft einer Entleer-Feder 83 wirkt. Der Entleerschieber 81 ist so ausgeführt, dass er durch die Federkraft der Entleer-Feder 83 in die Entleer-Stellung gebracht werden kann, diese also seine Grundstellung darstellt.

Über den Parksperrenschieber 80 kann die Parksperren-Verbindungsleitung 82 mit der Arbeitsdruckleitung 14 verbunden werden. Der Parksperrenschieber 80 befindet sich dann in einer dargestellten Nicht-P Stellung. Der Entleerschieber 81 befindet sich dabei zunächst noch in der Entleer-Stellung, in der er die Parksperren-Verbindungsleitung 82 so weit abschließt, dass sich in der Parksperren-Verbindungsleitung 82 ein Druck aufbauen kann. Damit wirkt dann in der Parksperren-Verbindungsleitung 82 der Arbeitsdruck, welcher dann auch als Steuerdruck auf den Entleerschieber 81 wirkt und diesen gegen die Federkraft in die Füll-Stellung bringt. Somit wird bei ausreichend hohem Arbeitsdruck dem ersten Parksperren-Druckraum 73 Getriebeöl zugeführt und die Parksperre wird, sofern die Rastierung deaktiviert ist, der Hubmagnet 77 also nicht in die Kontur 78 eingreift, ausgelegt. Dazu muss Getriebeöl aus dem zweiten Parksperren-Druckraum 74 in den Tank 13 abfließen können, weshalb in der Nicht-P Stellung des Parksperrenschiebers 80 der zweite Parksperren-Druckraum 74 über den Parksperrenschieber 80 mit dem Tank 13 verbunden ist.

Auf den Parksperrenschieber 80 wirkt als Steuerdruck der vom Regelmagnetventil-Schmierdruck 20 eingestellte Druck gegen eine Federkraft einer Parksperrenschieber-Feder 84. Dieser Druck wirkt damit als Steuerdruck auf den Schmierdruckschieber 19 als erste Ventileinheit, auf das Fliehölventil 45 als zweite Ventileinheit und den Parksperrenschieber 80 als dritte Ventileinheit. Die Parksperrenschieber-Feder 84 ist so angeordnet, dass sie den Parksperrenschieber 80 in die Nicht-P Stellung bringen kann, diese also die Grundstellung des Parksperrenschiebers 80 darstellt. Der Parksperrenschieber 80 ist so ausgelegt, dass er, wenn keine weiteren Drücke auf ihn wirken, ab einem Steuerdruck von ca. 7 bar die P-Stellung einnimmt. Da das Regelmagnetventil-Schmierdruck 20 maximal 8 bar einstellen kann, ist dem Parksperrenschieber 80 damit ein Druckbereich von 6 bis 8 bar zugeordnet.

Der Parksperrenschieber 80 ist außerdem so mit einer Gegendruckleitung 85 verbunden, dass ein in der Gegendruckleitung 85 Druck gleichsinnig mit der Federkraft der Parksperrenschieber-Feder 84 als Gegendruck gegen den Steuerdruck wirken kann. Bei entsprechend hohem Gegendruck bleibt damit der Parksperrenschieber 80 auch dann in der Nicht-P Stellung stehen, wenn ein Steuerdruck eingestellt ist, bei dem das Fliehölventil 45 in seiner Schaltstellung steht, in der ein schnelles Befüllen der Fliehölhaube 62 möglich ist. Dies ist auch dann gewährleistet, wenn sich auf Grund von Toleranzen, Verschleiß oder Alterung die genannten Druckbereiche verschoben haben und sich überlappen. Die Gegendruckleitung 85 ist über eine Kugelumschaltventil 86 mit den Gangwechsel-Druckräumen 41 der Gangwechsel-Kolben-Zylindereinheiten 37 und 39 verbunden. Das Kugelumschaltventil 86 ist dabei so angeordnet, dass der höhere der beiden in den genannten Drückräumen 41 als Gegendruck am Parksperrenschieber 80 wirkt. Ist eine der beiden den Gangwechsel-Kolben-Zylindereinheiten 37 und 39 zugeordneten Lamellenkupplungen betätigt und damit geschlossen, ist der Gegendruck ausreichend groß, um den Wechsel des Parksperrenschiebers 80 in die P-Stellung zu verhindern. Die hydraulische Steuerung ist so ausgelegt, dass eine der beiden Kupplungen in allen Gängen geschlossen ist, in denen eine Ansteuerung des Fliehölventils 45 notwendig sein kann.

Soll die Parksperre bei sehr geringem oder keinem Arbeitsdruck, also beispielsweise bei stehendem Verbrennungsmotor 11 und damit stehender Hauptpumpe 10 eingelegt werden, so wird hierzu die Parksperren-Feder 75 genutzt. Dazu wird der Hubmagnet 77 und damit die Rastierung 76 deaktiviert und die Parksperren-Feder 75 kann den Parksperrenkolben 70 in Richtung P-Stellung verschieben. Aus dem ersten Parksperren-Druckraum 73 muss dabei Getriebeöl abgeführt werden. Da kein oder nur ein sehr geringer Arbeitsdruck zur Verfügung steht, befindet sich der Parksperrenschieber 80 in seiner Grundstellung. Er kann also nicht in die P-Stellung gebracht werden, sondern steht in der Nicht-P Stellung. In der Nicht-P-Stellung des der Parksperrenschiebers 80 besteht über den der Parksperrenschieber 80 außer über Schieberspalte keine Verbindung zwischen der Parksperren-Verbindungsleitung 82 und dem Tank 13. Über den Parksperrenschieber 80 könnte das Getriebeöl deshalb nur sehr langsam in Richtung Tank 13 abfließen. Da in der Parksperren-Verbindungsleitung 82 in diesem Fall auch kein oder nur ein geringer Druck herrscht, befindet sich der Entleerschieber 81 wie oben beschrieben in seiner Entleer-Stellung. Damit kann das Getriebeöl aus dem ersten Parksperren-Druckraum 73 sehr schnell über den Entleerschieber 81 zum Tank 13 abgeführt und die Parksperre damit eingelegt werden.

## Patentansprüche

1. Hydraulische Steuerung für ein Automatikgetriebe eines Kraftfahrzeugs mit einem Gangwechselsystem (61), welches wenigstens eine Gangwechsel-Kolben-Zylindereinheit (35, 36, 37, 38, 39, 40) mit einem Gangwechselkolben (65) zur Betätigung eines Schaltelements, einem Gangwechsel-Druckraum (41), in dem ein Betätigungsdruck aufgebaut werden kann, und einem durch den Gangwechselkolben (41) vom Gangwechsel-Druckraum (41) getrennten Fliehölraum (62) aufweist, wobei dem Fliehölraum (62) über eine von einer ersten Zuführleitung (63) versorgbare Fliehölleitung (64) Betriebsfluid zugeführt werden kann,
ferner aufweisend eine zweite Zuführleitung (66) zur Zuführung von Betriebsfluid zur Fliehölleitung (64), welche mittels eines Fliehölventils (45) geschlossen und geöffnet werden kann,
wobei in der ersten und/oder der zweiten Zuführleitung (63, 66) Hydraulikelemente (49, 67) zur Einstellung von Durchflussmengen des Betriebsfluids angeordnet sind, wobei in der ersten Zuführleitung (63) ein hydrodynamischer Drehmomentwandler (47) angeordnet ist,
**dadurch gekennzeichnet, dass**
die erste Zuführleitung (63) über zwei parallel verlaufende Teilstücke (48, 50) mit dem Fliehölventil (45) verbunden ist und mittels des Fliehölventils (45) eines der zwei Teilstücke (50) abgesperrt werden kann.

2. Hydraulische Steuerung nach Anspruch 1,
**dadurch gekennzeichnet, dass**
das Fliehölventil (45) als ein ansteuerbares Ventil ausgeführt ist, welches in einer Grundstellung die zweite Zuführleitung (66) verschließt.

3. Hydraulische Steuerung nach einem der vorhergehenden Ansprüche,
**dadurch gekennzeichnet, dass**
in der ersten Zuführleitung (63) ein Getriebeölkühler (52) und/oder Abzweigungen (53) in Schmierölleitungen angeordnet sind.

4. Hydraulische Steuerung nach einem der vorhergehenden Ansprüche,
**gekennzeichnet durch**
ein Vorsteuerventil (20) und eine erste und eine dritte Ventileinheit (19, 80), wobei ein mittels des Vorsteuerventils (20) eingestellter Vorsteuerdruck als Steuerdruck auf die erste und dritte Ventileinheit (19, 80) sowie auf das Fliehölventil (45) als zweite Ventileinheit leitbar ist und ein mittels einer Gegendruckleitung (85) ein gegen den Steuerdruck wirkender Gegendruck an die dritte Ventileinheit (80) angelegt und damit eine Betätigung der dritten Ventileinheit (80) verhindert werden kann.

5. Hydraulische Steuerung nach Anspruch 4,
**dadurch gekennzeichnet, dass**
der genannte Gegendruck von einem Druck abgeleitet wird, der hauptsächlich eine andere Funktion erfüllt.

6. Hydraulische Steuerung nach Anspruch 5,
**dadurch gekennzeichnet, dass**
ein Umschaltventil (86) vorgesehen ist, mittels welchem der Gegendruck von einem ersten oder von einem zweiten Druck abgeleitet werden kann.

7. Hydraulische Steuerung nach Anspruch 5 oder 6,
**dadurch gekennzeichnet, dass**
der Gegendruck von einem Betätigungsdruck eines Schaltelements (37, 39) des Automatikgetriebes abgeleitet wird.

## Claims

1. Hydraulic controller for an automatic gearbox of a motor vehicle, having at least one gear change piston-and-cylinder unit (35, 36, 37, 38, 39, 40) with a gear change piston (65) for actuating a shifting element, a gear change pressure chamber (41) in which an actuating pressure can be built up and a centrifugal oil chamber (62) separated from the gear change pressure chamber (41) by the gear change piston (65), wherein operating fluid can be fed to the centrifugal oil chamber (62) via a centrifugal oil line (64) which can be supplied by a first supply line (63), further comprising a second supply line (66) which can be closed and opened by means of a centrifugal oil valve (45),
wherein hydraulic elements (49, 67) for adjusting flow quantities of the operating fluid are located in the first and/or the second supply line (63, 66),
wherein a hydrodynamic torque converter (47) is located in the first supply line (63),
**characterised in that**
the first supply line (63) is connected to the centrifugal oil valve (45) via two parallel sections (48, 50) and one of the two sections (50) can be closed off by means of the centrifugal oil valve (45).

2. Hydraulic controller according to claim 1,
**characterised in that**
the centrifugal oil valve (45) is designed as a selectable valve which closes the second supply line (66) in a normal position.

3. Hydraulic controller according to any of the preceding claims,
**characterised in that**
a gear oil cooler (52) and/or branches (53) in lubricating oil lines are located in the first supply line (63).

4. Hydraulic controller according to any of the preceding claims,
**characterised by**
a pilot valve (20) and a first and a third valve unit (19, 80), wherein a pilot pressure set by means of the pilot valve (20) can be directed as control pressure to the first and the third valve unit (19, 80) and to the centrifugal oil valve (45) representing a second valve unit, and wherein a counterpressure acting against the control pressure can be applied to the third valve unit (80) by means of a counterpressure line (85), thereby preventing an actuation of the third valve unit (80).

5. Hydraulic controller according to claim 4,
**characterised in that**
said counterpressure is derived from a pressure which mainly fulfils another function.

6. Hydraulic controller according to claim 5,
**characterised in that**
a changeover valve (86) is provided, by means of which the counterpressure can be derived from a first or from a second pressure.

7. Hydraulic controller according to claim 5 or 6,
**characterised in that**
the counterpressure is derived from an actuating pressure of a shifting element (37, 39) of the automatic gearbox.

## Revendications

1. Commande hydraulique destinée à une transmission automatique d'un véhicule automatique comprenant un système de changement de rapport (61), qui comporte au moins un ensemble piston-cylindre de changement de vitesse (35, 36, 37, 38, 39, 40) muni d'un piston de changement de vitesse (65) pour l'actionnement d'un élément de changement de rapport, d'une chambre de pression de changement de rapport (41) dans laquelle une pression d'actionnement peut être obtenue, et d'une chambre d'huile centrifuge (62) séparée de la chambre de pression de changement de vitesse (41), le fluide de travail pouvant être amené à la chambre d'huile centrifuge (62) par l'intermédiaire d'une conduite d'huile centrifuge (64) alimentée par une première conduite d'amenée (63), présentant en outre une seconde conduite d'amenée (64) pour l'alimentation en fluide de travail la conduite d'huile centrifuge (64) qui peut s'ouvrir et se fermer au moyen d'une soupape d'huile centrifuge (45), dans la première et la seconde conduite d'amenée (63, 64) étant disposés des éléments hydrauliques (49, 67) pour réguler les débits volumiques du fluide de travail, dans la première conduite d'amenée (63) étant disposé un convertisseur de couple hydrodynamique (47), **caractérisée en ce que** la première conduite d'amenée (63) est raccordée par deux pièces parallèles (48, 50) à la soupape d'huile centrifuge (45) et peut être fermée au moyen de la soupape de fluide centrifuge (45) d'une des deux pièces (50).

2. Commande hydraulique selon la revendication 1 **caractérisée en ce que** la soupape de fluide centrifuge (45) est conçue sous la forme d'une soupape pouvant être commandée qui ferme la seconde conduite d'amenée (66) dans une position de base.

3. Commande hydraulique selon l'une quelconque des revendications précédentes, **caractérisée en ce que** dans la première conduite d'amenée (63) est disposé un refroidisseur d'huile de transmission (52) et/ou des dérivations (53) dans les conduites de lubrifiant.

4. Commande hydraulique selon l'une quelconque des revendications précédentes, **caractérisée par** une soupape pilote (20) et un premier et un troisième ensemble de soupapes (19, 80), une pression pilote réglée au moyen de la soupape pilote (20) en tant que pression de commande pouvant être dirigée vers le premier et le troisième ensemble de soupapes (19, 80) ainsi que vers la soupape de fluide centrifuge (45) en tant que second ensemble de soupapes et au moyen d'une conduite de contre-pression (85) une contre-pression agissant contre la pression de commande pouvant être appliquée au troisième ensemble de soupapes (80) et ainsi rendant impossible un actionnement du troisième ensemble de soupapes (80).

5. Commande hydraulique selon la revendication 4, **caractérisée en ce que** ladite contre-pression est dérivée d'une pression qui remplit principalement une autre fonction.

6. Commande hydraulique selon la revendication 5, **caractérisée en ce qu'**une soupape d'inversion (86) permet de dériver la contre-pression d'une première ou d'une seconde pression.

7. Commande hydraulique selon la revendication 5 ou 6, **caractérisée en ce que** la contre-pression est dérivée d'une pression d'actionnement d'un élément de changement de vitesse (37, 39) de la transmission automatique.
